# EUROPEAN PATENT APPLICATION

(11) **EP 4 245 586 A1**
(43) Date of publication of application: **20.09.2023**
(21) Application number: 23161915.6
(22) Date of filing: 14.03.2023
(51) Int. Cl.: B60K 13/04

(54) **VIBRATION ISOLATING BRACKET FOR EXHAUST TREATMENT UNIT**

(30) Priority: 14.03.2022 US 202263319572 P
(71) Applicant: Carrier Corporation, Palm Beach Gardens, FL 33418 (US)
(72) Inventor: BELOUS, Erik, Syracuse 13221 (US)
(74) Representative: Dehns

(57) **Abstract**

A mounting assembly (60) for at least one component of a transport refrigeration unit (12) includes a first mounting bracket (62) including a body having a central portion (68), and a second mounting bracket (64) including a base (84). The base (84) is offset from a surface of the central portion (68). The mounting assembly (60) additionally includes at least one vibration isolator (98). The central portion (68) and the base (84) are connected by the at least one vibration isolator (98).

## Description

Embodiments of the present invention relate to transport refrigeration systems, and more specifically, to a mounting system for an exhaust gas filtering device of a transport refrigeration system.

Fruits, vegetables and other perishable items, including meat, poultry and fish, fresh or frozen, are commonly transported in the cargo box of a truck or trailer, or in an intermodal container. Accordingly, it is customary to provide a transport refrigeration system in operative association with the cargo box for cooling the atmosphere within the cargo box. The transport refrigeration system includes a refrigerant vapor compression system, also referred to as a transport refrigeration unit, and an on-board power unit. The refrigerant vapor compression system typically includes a compressor, a condenser, an expansion device and an evaporator serially connected by refrigerant lines in a closed refrigerant circuit in accord with known refrigerant vapor compression cycles. The power unit includes an engine, typically diesel powered.

To meet emission regulations, a diesel oxidation catalyst (DOC) is configured to receive the exhaust from the diesel engine. The exhaust pipe connected to the DOC is typically formed from a flex pipe. However, the overall length of the flex pipe is short to meet the sizing constraints of the housing. As a result of the weight of the DOC and the short length of flex pipe, there is a potential risk of failure at the flex pipe.

According to a first aspect, the present invention provides a mounting assembly for at least one component of a transport refrigeration unit includes a first mounting bracket including a body having a central portion and a second mounting bracket including a base. The base is offset from a surface of the central portion. The mounting assembly additionally includes at least one vibration isolator. The central portion and the base are connected by the at least one vibration isolator.

Optionally, the first mounting bracket is connectable to a first component and the second mounting bracket is connectable to a second component.

Optionally, the central portion of the body includes a first end and a second end and the body of the first mounting bracket further comprises a first flange extending from the first end in a first direction away from the base, and a second flange extending from the second end in the first direction away from the base.

Optionally, the second mounting bracket further comprises a connector extending from the base. The connector has a first portion and a second portion. B both the first portion and the second portion are positioned in contact with the second component.

Optionally, at least one of the first mounting bracket and the second mounting bracket is formed from a metal.

Optionally, the at least one vibration isolator includes a plurality of vibration isolators spaced apart from one another about the base.

Optionally, the plurality of vibration isolators are substantially identical.

Optionally, least one of the plurality of vibration isolators is different from a remainder of the plurality of vibration isolators.

Optionally, the parameter is selected from size, shape, and stiffness.

According to a second aspect, the present invention the present invention an assembly for a transport refrigeration unit includes a first component, a second component, and a mounting assembly connected to the first component and to the second component. The mounting assembly further comprises a first mounting bracket connected to the first component and a second mounting bracket connected to the second component. The second mounting bracket is offset from the first component by a clearance. At least one vibration isolator extends between the first mounting bracket and the second mounting bracket.

Optionally the first component is an exhaust treatment unit.

Optionally, the second component is a frame of the transport refrigeration unit.

Optionally, the second component is an engine of the transport refrigeration unit.

Optionally, the first mounting bracket includes a central portion having an end and at least one flange extending from the end in a direction away from the second mounting bracket.

Optionally, the at least one flange is connectable to the second component via a fastener.

Optionally, the second mounting bracket includes a base and a connector extending from the base. The connector may have a first portion and a second portion. Both the first portion and the second portion may be positioned in contact with a portion of the second component.

Optionally, the base is arranged generally parallel to the central portion.

Optionally, the at least one vibration isolator includes a plurality of vibration isolators and the plurality of vibration isolators are substantially identical.

Optionally, the at least one vibration isolator includes a plurality of vibration isolators and a parameter of at least one of the plurality of vibration isolators is different from a remainder of the plurality of vibration isolators.

Optionally, the parameter is selected from size, shape, and stiffness.

The following descriptions should not be considered limiting in any way. With reference to the accompanying drawings, like elements are numbered alike:
FIG. 1 is a perspective view of an exemplary transport refrigeration system;
FIG. 2 is a schematic diagram of a portion of a transport refrigeration system;
FIG. 3 is a perspective view of an exemplary mounting assembly for use in a transport refrigeration unit;
FIG. 4 is a front perspective view of a mounting assembly connected to an exhaust treatment unit within a transport refrigeration unit; and
FIG. 5 is a rear perspective view of a mounting assembly connected to an exhaust treatment unit within a transport refrigeration unit.

A detailed description of one or more embodiments of the disclosed apparatus and method are presented herein by way of exemplification and not limitation with reference to the Figures.

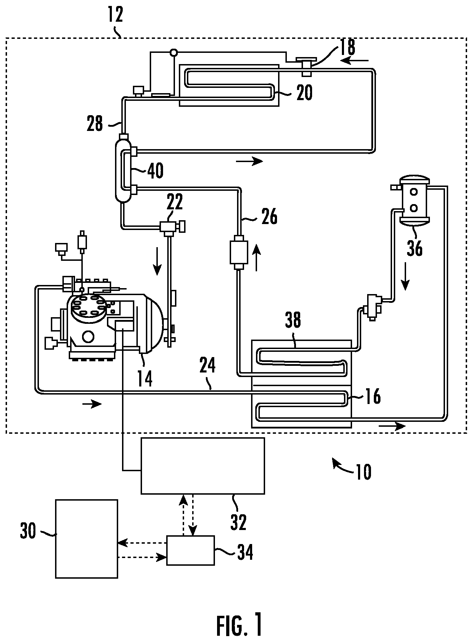

Referring to FIG. 1, an exemplary schematic diagram of a transport refrigeration systems for controlling the temperature of the atmosphere within a cargo carrying area of a truck, trailer, container, intermodal container or similar cargo transportation unit. The transport refrigeration system 10 includes a transport refrigeration unit 12 including a compressor 14, a refrigerant condenser heat exchanger 16, an expansion device 18, a refrigerant evaporator heat exchanger 20 and a suction modulation valve 22 connected in a closed loop refrigeration circuit including refrigerant lines 24, 26 and 28 and arranged in a conventional refrigeration cycle. The transport refrigeration system 10 further includes an electronic system controller 30, a power source 32, such as a diesel engine for example, and a controller 34. The transport refrigeration system 10 is mounted as in conventional practice to an exterior wall of the truck, trailer or container with the compressor 14 and the condenser heat exchanger 16 with its associated condenser fan(s) (not shown) and diesel engine 32 disposed externally of the refrigerated cargo box.

As is conventional practice, when the transport refrigeration unit 12 is operating in a cooling mode, low temperature, low pressure refrigerant vapor is compressed by the compressor 14 to a high pressure, high temperature refrigerant vapor and passed from the discharge outlet of the compressor 14 into refrigerant line 24. The refrigerant circulates through the refrigerant circuit via refrigerant line 24 to and through the heat exchange tube coil or tube bank of the condenser heat exchanger 16, wherein the refrigerant vapor condenses to a liquid, thence through the receiver 36, which provides storage for excess liquid refrigerant, and thence through the subcooler coil 38 of the condenser. The subcooled liquid refrigerant then passes through refrigerant line 24 through a first refrigerant pass of the refrigerant-to-refrigerant heat exchanger 40, and thence traverses the expansion device 18 before passing through the evaporator heat exchanger 20. In traversing the expansion device 18, the liquid refrigerant is expanded to a lower temperature and lower pressure prior to passing to the evaporator heat exchanger 20.

In flowing through the heat exchange tube coil or tube bank of the evaporator heat exchanger 20, the refrigerant evaporates, and is typically superheated, as it passes in heat exchange relationship return air drawn from the cargo box passing through the airside pass of the evaporator heat exchanger 20. The refrigerant vapor thence passes through the refrigerant line 26, the refrigerant vapor traverses a second refrigerant pass of the refrigerant-to-refrigerant heat exchanger 40 in heat exchange relationship with the liquid refrigerant passing through the first refrigerant pass thereof. Before entering the suction inlet of the compressor 14, the refrigerant vapor passes through the suction modulation valve 22 disposed in refrigerant line 26 downstream with respect to refrigerant flow of the refrigerant-to-refrigerant heat exchanger 40 and upstream with respect to refrigerant flow of the compressor 14. By selectively reducing the open flow area through the suction modulation valve 22, the controller 30 can selectively restrict the flow of refrigerant vapor supplied to the compressor 14, thereby reducing the capacity output of the transport refrigeration unit 12 and in turn reducing the power demand imposed on the engine 32.

Air drawn from within the cargo box by the evaporator fan(s) (not shown) associated with the evaporator heat exchanger 20, is passed over the external heat transfer surface of the heat exchange tube coil or tube bank of the evaporator heat exchanger 20 and circulated back into the interior space of the cargo box. The air drawn from the cargo box is referred to as "return air" and the air circulated back into the cargo box is referred to as "supply air". It is to be understood that the term "air" as used herein includes mixtures of air and other gases, such as for example, but not limited to nitrogen or carbon dioxide, sometimes introduced into a refrigerated cargo box for transport of perishable product such as produce.

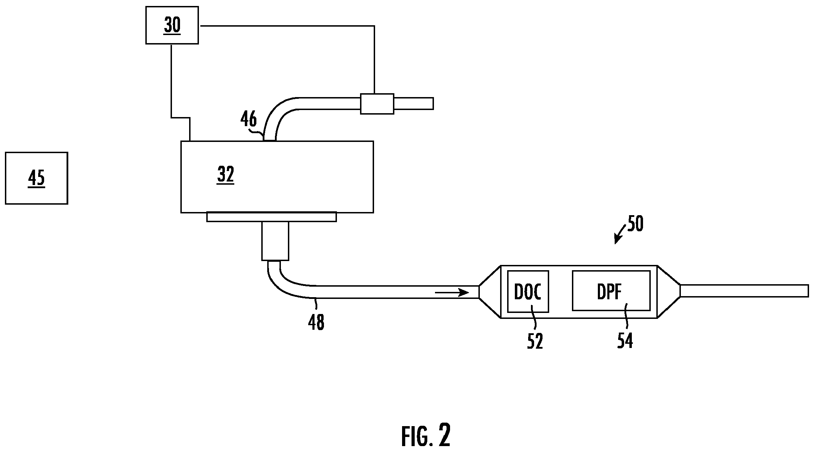

Referring now to FIG. 2, the diesel engine 32 receives diesel fuel from a fuel supply 45 and air through an air inlet 46. After combustion in the diesel engine 32, the byproducts of combustion, exhaust gas including particulates such as soot and other materials, exits the diesel engine 32 via an exhaust system including an exhaust pipe defining an exhaust pathway 48, and an exhaust treatment unit 50 disposed in-line in the exhaust pipe. In the illustrated, non-limiting embodiment, the exhaust treatment unit 50, such as a catalytic converter for example, includes a diesel oxidation catalyst (DOC) 52 and a diesel particulate filter (DPF) 54 provided along the exhaust pathway 48. The DOC 52 is configured to break down the exhaust pollutants into less harmful substances, such as carbon dioxide and water for example, and the DPF 54 is configured to remove the particulates from the exhaust gas prior to the exhaust gas reaching the ambient atmosphere. However, embodiments where the DOC 52 and the DPF 54 are mounted separately within different housings are also contemplated herein.

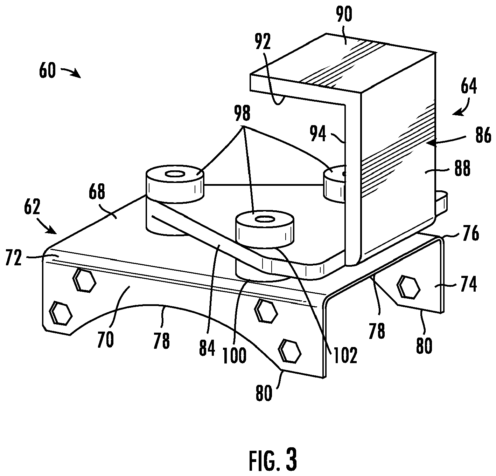

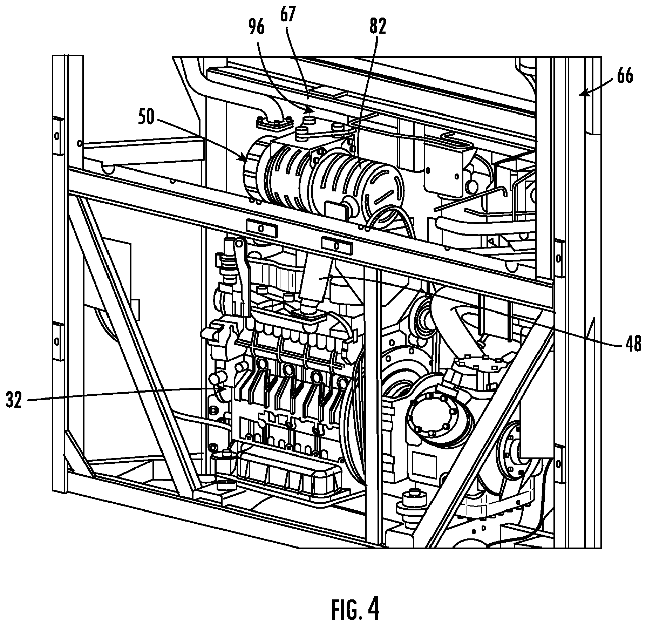

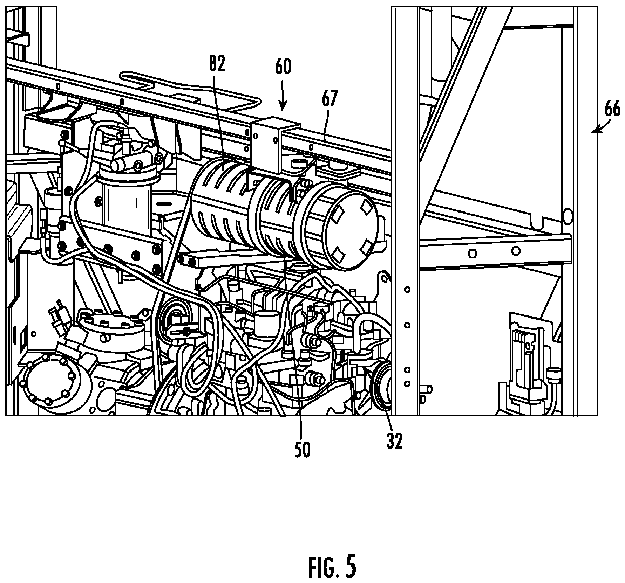

With reference now to FIG. 3, an exemplary mounting assembly 60 for mounting all or a portion of an exhaust treatment unit 50, such as the DOC 52 for example, within a transport refrigeration unit 12 is illustrated according to an embodiment. As shown, the mounting assembly 60 includes a first mounting bracket 62 connectable to a first component, such as the exhaust treatment unit 50, and a second mounting bracket 64 connectable to a second component, such as portion of a frame 66 (see FIGS. 4 and 5) of the transport refrigeration unit 12. However, embodiments where the second mounting bracket 64 is operable to connect the exhaust treatment unit 50 directly to the engine 32 are also contemplated herein. The first mounting bracket 62 includes a body having a central portion 68 and at least one flange extending therefrom. In the illustrated, non-limiting embodiment, a first flange 70 extends from a first end 72 of the central portion 68 in a first direction and a second flange 74 extends from a second, opposite end 76 of the central portion 68 in the same first direction. The central portion 68 of the body may have a generally planar configuration, and the first and second flanges 70, 74 may extend generally orthogonally to the central portion 68. However, embodiments where at least one of the flanges 70, 74 is oriented at a non-perpendicular angle to the central portion 68 are also within the scope of the disclosure.

In an embodiment, the first mounting bracket 62 may be formed from a metal material, such as by bending a piece of sheet metal for example. In such embodiments the flanges 70, 74 and the central portion 68 are integrally formed. However, embodiments where at least one of the flanges 70, 74 is a separate component connected to the central portion 68 are also contemplated herein. The first flange 70 and the second flange 74 may, but need not have a substantially identical configuration. In an embodiment, each flange 70, 74 has a contoured contact surface 78 formed at a distal end 80 thereof, the contour of the contact surface 78 being complementary to a portion of the exhaust treatment unit 50, such as a housing 82 (see FIGS. 4 and 5) thereof.

The second mounting bracket 64 includes a base 84 and a connector 86 extending from the base 84. As shown, the connector 86 extends from the base 84 in a second direction. Although the connector 86 is illustrated as being oriented generally perpendicular to the base 84, embodiments where the connector 86 extends at another angle to the base 84 are also contemplated herein. The connector 86 may be sized and shaped to engage with one or more frame members of the transport refrigeration unit 12. In the illustrated, non-limiting embodiment, the connector 86 includes a first portion 88 and a second portion 90 extending from the first portion 88. The first and second portion 88, 90 may be integrally formed, or alternatively, may be separate pieces coupled together. As shown, the second portion 90 may be arranged generally perpendicular to the first portion 88. However, the second portion 90 may alternatively be arranged at another angle relative to the first portion 88. The relative angle between the first and second portions 88, 90 may be determined in part by the configuration of the at least one frame member that the connector 86 is positionable to engage.

In the illustrated, non-limiting embodiment, a surface of both the first portion 88 and the second portion 90 of the connector 86 is positionable in contact with the frame 66. Although the first and second portions 88, 90 are illustrated as being arranged in contact with the same frame member 67, embodiments where the first portion 88 and the second portion 90 of the connector 86 are in contact with different frame members are also within the scope of the disclosure. In an embodiment, a substantial entirety of a surface 92 of the second portion 90 of the connector 86 is positioned in overlapping arrangement with a frame member 67. However, embodiments where only part of the surface 92 of the second portion 90 is in contact with the frame 66 are also contemplated herein. Further, a height of the first portion 88 may be greater than a height of the frame member 67 such that only part of a surface 94 of the first portion 88 facing the frame member 67 is arranged in contact with the frame member 67. By extending the height of the first portion 88 relative to the frame member 67, a clearance exists 96 (see FIGS. 4 and 5) between the frame member 67 and an adjacent surface of the base 84.

The first mounting bracket 62 and the second mounting bracket 64 are operably coupled to one another by at least one vibration isolator 98. Although the vibration isolator is illustrated as a cylindrical pad, embodiments having another configuration are also contemplated herein. In an embodiment, the first and second mounting brackets 62, 64 are operably coupled by a plurality of vibration isolators 98. Although three vibration isolators 98 are shown in the non-limiting embodiment of FIG. 3, it should be understood that embodiments having a single vibration isolator, two vibration isolators, or four or more vibration isolators are also contemplated herein. The shape of the base 84 may be selected based on the total number of vibration isolators 98 included. In the illustrated, non-limiting embodiment, the base 84 is generally triangular in shape and each vibration isolator 98 is positioned at or near a corner thereof. However, embodiments where the vibration isolators 98 are arranged at another position of the base 84 and/or where the shape of the base 84 is independent of the total number of vibration isolators 98 included in the mounting assembly 60 are also contemplated herein. Further, the plurality of vibration isolators 98 are illustrated as being substantially identical. However, it should be understood that embodiments where one or more parameters of the vibration isolators 98 may vary are also within the scope of the disclosure. Examples of such parameters include, but are not limited to size, shape, and stiffness. Accordingly, one or more parameters of the vibration isolators 98 may be controlled to tune the frequency of the mounting assembly 60.

In an embodiment, the vibration isolators 98 extend through an opening 100, 102 formed in both the first mounting bracket 62 and the second mounting bracket 64, respectively. As shown, a through hole 100 formed in the central portion 68 is aligned with a corresponding through hole 102 formed in the base 84. A diameter of the through holes 100, 102 may be slightly smaller than a diameter of the vibration isolator 98 receivable therein such that a slight compression of the vibration isolator 98 is required to install the vibration isolator 98. This allows the vibration isolators 98 to be installed manually and retains the vibration isolators 98 in place relative to the first and second mounting bracket s 63, 64. However, in other embodiments, a fastener, such as a nut and bolt for example, may be used to mount the at least one vibration isolator 98 to the first and second mounting bracket s 62, 64.

With reference to FIGS. 4 and 5, to connect the mounting assembly 60 to the exhaust treatment unit 50, the flanges 70, 74 are coupled to corresponding flanges of the housing 82. In the illustrated, non-limiting embodiment, a plurality of fasteners, such as bolts for example, extend through openings formed in both the flanges of the housing 82 and the flanges 70, 74 of the first mounting bracket 62. However, the first mounting bracket 62 may be rigidly connected to the exhaust treatment unit 50 in any suitable manner. As shown, a portion of the second mounting bracket 64, such as the second portion 90 of the connector 86 for example, may simply rest on a frame member 67. However, embodiments where the second mounting bracket 64 is rigidly attached to the frame member 67 are also contemplated herein. Because the first and second mounting bracket s 62, 64 are coupled via the vibration isolators 98, the exhaust treatment unit 50 is isolated from the vibration of the frame 66 and the frame 66 is isolated from the vibration of the exhaust treatment unit 50.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements of the described embodiments without departing from the scope of the present invention. In addition, many modifications may be made to adapt a particular situation or material to the teachings herein without departing from the scope of the present invention. Therefore, it is intended that the present invention not be limited to the particular embodiment disclosed, but that the present invention will include all embodiments falling within the scope of the claims.

## Claims

1. A mounting assembly (60) for at least one component of a transport refrigeration unit (12), the mounting assembly (60) comprising:
a first mounting bracket (62) including a body having a central portion (68);
a second mounting bracket (64) including a base (84), the base (84) being offset from a surface of the central portion (68); and
at least one vibration isolator (98), wherein the central portion (68) and the base (84) are connected by the at least one vibration isolator (98).

2. The mounting assembly (60) of claim 1, wherein the first mounting bracket (62) is connectable to a first component and the second mounting bracket (64) is connectable to a second component.

3. The mounting assembly (60) of claim 2, wherein the central portion (68) of the body includes a first end and a second end and the body of the first mounting bracket (62) further comprises a first flange (70) extending from the first end in a first direction away from the base, and a second flange (74) extending from the second end in the first direction away from the base.

4. The mounting assembly (60) of claim 2 or 3, wherein the second mounting bracket (64) further comprises a connector (86) extending from the base, the connector (86) having a first portion (88) and a second portion (90), wherein both the first portion (88) and the second portion (90) are positioned in contact with the second component.

5. The mounting assembly (60) of any preceding claim, wherein at least one of the first mounting bracket (62) and the second mounting bracket (64) is formed from a metal.

6. The mounting assembly (60) of any preceding claim, wherein the at least one vibration isolator (98) includes a plurality of vibration isolators (98) spaced apart from one another about the base.

7. The mounting assembly (60) of claim 6, wherein the plurality of vibration isolators (98) are substantially identical.

8. The mounting assembly (60) of claim 6, wherein a parameter of at least one of the plurality of vibration isolators (98) is different from a remainder of the plurality of vibration isolators (98), optionally wherein the parameter is selected from size, shape, and stiffness.

9. An assembly for a transport refrigeration unit (12), the assembly comprising:
a first component;
a second component; and
a mounting assembly (60) connected to the first component and to the second component, the mounting assembly (60) comprising:
a first mounting bracket (62) connected to the first component;
a second mounting bracket (64) connected to the second component, where the second mounting bracket (64) is offset from the first component by a clearance; and
at least one vibration isolator (98) extending between the first mounting bracket (62) and the second mounting bracket (64).

10. The assembly of claim 9, wherein the first component is an exhaust treatment unit (50).

11. The assembly of claim 9 or 10, wherein the second component is a frame (66) of the transport refrigeration unit (12) or an engine (32) of the transport refrigeration unit (12).

12. The assembly of claim 9, 10 or 11, wherein the first mounting bracket (62) includes a central portion (68) having an end and at least one flange (70, 74) extending from the end in a direction away from the second mounting bracket (64), optionally wherein the at least one flange (70,74) is connectable to the second component via a fastener.

13. The assembly of claim 12, wherein the second mounting bracket (64) includes a base (84) and a connector (86) extending from the base (84), the connector (86) having a first portion (88) and a second portion (90), wherein both the first portion (88) and the second portion (90) are positioned in contact with a portion of the second component, optionally wherein the base (84) is arranged generally parallel to the central portion (68).

14. The assembly of any of claims 9 to 13, wherein the at least one vibration isolator (98) includes a plurality of vibration isolators (98) and the plurality of vibration (98) isolators are substantially identical.

15. The assembly of any of claims 9 to 13, wherein the at least one vibration isolator (98) includes a plurality of vibration isolators (98) and a parameter of at least one of the plurality of vibration isolators (98) is different from a remainder of the plurality of vibration isolators (98), optionally wherein the parameter is selected from size, shape, and stiffness.
